# EUROPÄISCHE PATENTSCHRIFT

(11) **EP 1 813 490 B1**
(45) Veröffentlichungstag und Bekanntmachung des Hinweises auf die Patenterteilung: **20.04.2011**
(21) Anmeldenummer: 07100040.0
(22) Anmeldetag: 03.01.2007
(51) Int. Cl.: B60T 8/36, F16K 31/06, H01F 7/08

(54) **Magnetventil**
Solenoid valve
Electrovanne

(30) Priorität: 25.01.2006 DE 102006003490
(43) Veröffentlichungstag der Anmeldung: 01.08.2007
(73) Patentinhaber: ROBERT BOSCH GMBH, 70442 Stuttgart (DE)
(72) Erfinder: Kratzer, Dietmar, 71732 Tamm (DE)

(56) Entgegenhaltungen:
- EP-A- 1 227 021
- DE-A1-102004 030 424

## Beschreibung

Die Erfindung geht aus von einem Magnetventil nach der Gattung des unabhängigen Patentanspruchs 1.

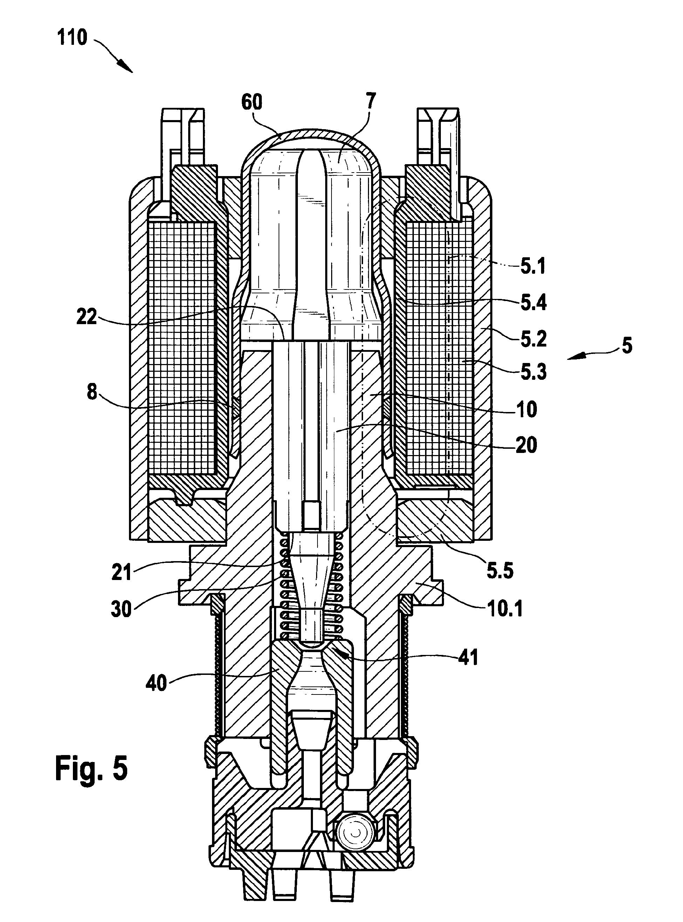

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 5 dargestellt. Wie aus Figur 5 ersichtlich ist, umfasst das herkömmliche Magnetventil 110 eine Magnetbaugruppe 5 zur Erzeugung eines Magnetflusses 5.1, welche ein Gehäuse 5.2, eine Spulenwicklung 5.3, einen Spulenkörper 5.4 und eine Abdeckscheibe 5.5 umfasst, und eine Ventilpatrone, welche eine Kapsel 60, einen Ventileinsatz 10, einen Stößel 20, eine Rückstellfeder 30 und einen Anker 7 umfasst. Bei der Herstellung des Magnetventils 110 werden die Kapsel 60 und der Ventileinsatz 10 der Ventilpatrone durch Pressen aufeinander gefügt und durch eine Dichtschweißung 8 wird die Ventilpatrone hydraulisch gegenüber der Atmosphäre abgedichtet. Zusätzlich nimmt der Ventileinsatz 10 die im hydraulischen System auftretenden Druckkräfte auf und leitet diese über einen Verstemmflansch 10.1 an einem nicht dargestellten Verstemmbereich auf einen Fluidblock weiter. Zudem leitet der Ventileinsatz 10 den von der gefügten Magnetbaugruppe 5 eingeleiteten Magnetfluss 5.1 axial über einen Luftspalt in Richtung Anker 7. Außerdem nimmt der Ventileinsatz 10 den so genannten Ventilkörper 40 auf, welcher einen Dichtsitz 41 umfasst, in welchen der Stößel 20 dichtend eintaucht, um die Dichtfunktion des Magnetventils 110 umzusetzen. Wie weiter aus Figur 5 ersichtlich ist, werden der Stößel 20 und die Rückstellfeder 30 im Ventileinsatz 10 geführt. Die untere Anbindung der Magnetbaugruppe 5 geschieht durch direktes Aufpressen der Abdeckscheibe 5.5 auf den magnetisch leitenden Ventileinsatz 10 der Ventilpatrone. Die ebenfalls auf den Ventileinsatz 10 gepresste und verschweißte Kapsel 6 weist einen unteren Bereich auf, welcher überlappend auf den Ventileinsatz 10 geschoben ist. Wie oben bereits ausgeführt ist, führ der Ventileinsatz 10 des herkömmlichen Magnetventils 110 viele verschiedene Funktionen wie Leiten des Magnetflusses 5.1, hydraulisches Abdichten, Verstemmen in einem Fluidblock, Führen des Stößels 20, Führen der Rückstellfeder 30, Aufnehmen des Ventilkörpers 40 usw. aus, so dass der Ventileinsatz komplex aufgebaut und damit teuer in der Herstellung ist.

In der nicht vorveröffentlichten deutschen Patentanmeldung DE 102005044672.8 der Anmelderin wird ein Magnetventil beschrieben, welches die beschriebenen Funktionen des Ventileinsatzes auf mehrere Komponenten verteilt, um den Ventileinsatz einfacher ausführen zu können. Bei dem beschriebenen Magnetventil wird der Überlappungsbereich der Kapsel in Richtung Verstemmbereich verlängert und mit einer Ventilbuchse am Verstemmbereich mit dem Fluidblock verstemmt. Zudem ist als Unterteil der Ventilpatrone eine Hülse mit Dichtsitz in die verlängerte Kapsel eingefügt. Durch die Verlängerung der Kapsel in den Fluidblock, erfolgt die Abdichtung gegenüber der Atmosphäre und die Verstemmung mit dem Fluidblock in vorteilhafter Weise über die Ventilbuchse und nicht mehr über den Ventileinsatz. Dadurch wird der Ventileinsatz entlastet und kann einfacher ausgeführt werden. Zudem kann auf einen Herstellungsschritt zum Dichtschweißen der Kapsel auf den Ventileinsatz verzichtet werden.

### Vorteile der Erfindung

Das erfindungsgemäße Magnetventil mit den Merkmalen des unabhängigen Patentanspruchs 1 hat demgegenüber den Vorteil, dass ein Ventileinsatz aus mindestens zwei Segmenten aufgebaut ist, welche im zusammengesetzten Zustand eine Innenbohrung zur Führung eines Stößels bilden und einen Magnetfluss einer Magnetbaugruppe leiten. Da die Innenbohrung zur Führung des Stößels durch das Zusammensetzen der einzelnen Segmente und nicht wie beim Stand der Technik durch eine Bohrung entsteht, kann in vorteilhafter Weise die Herstellung des Ventileinsatzes weiter vereinfacht und kostengünstiger gestaltet werden, da ein teurer Prozessschritt zum chemischen Entgraten des Ventileinsatzes entfallen kann, welcher wegen der hohen geforderten Genauigkeit der Innenbohrung bei herkömmlichen Ventileinsätzen erforderlich ist.

Durch die in den abhängigen Ansprüchen aufgeführten Maßnahmen und Weiterbildungen sind vorteilhafte Verbesserungen des im unabhängigen Patentanspruch angegebenen Magnetventils möglich.

Besonders vorteilhaft ist, dass die Kapsel mit einer Ventilbuchse an einem Verstemmbereich mit einem Fluidblock verstemmt ist und eine Hülse mit einem Dichtsitz in die Kapsel eingefügt ist, wodurch der Ventileinsatz stark vereinfacht wird. Zudem können in den Stößel zwischen einer Stößeloberseite und einer Stößelunterseite Volumenausgleichsnuten eingebracht werden, wobei der Stößel durch eine Rückstellfeder zurückgestellt wird, welche sich innerhalb des Ventileinsatzes gegen den Ventileinsatz abstützt.

In Ausgestaltung des erfindungsgemäßen Magnetventils sind die mindestens zwei Segmente als einfache Körper ohne Innenkonturen ausgeführt. Die mindestens zwei Segmente können achsensymmetrisch zu einer Längsachse ausgeführt werden und beispielsweise als symmetrische Rohrabschnitte ausgeführt werden. So kann der Ventileinsatz beispielsweise aus zwei Rohrhälften oder aus einer vorgebbaren Anzahl von identischen Rohrabschnitten aufgebaut werden. Alternativ können die mindestens zwei Segmente eine axiale Teilung mit einem Sprung aufweisen.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: eine schematische Schnittdarstellung einer Ventilpatrone für ein erfindungsgemäßes Magnetventil,
- Figur 2: eine schematische Querschnittdarstellung entlang einer Linie A-A aus Figur 1 zur Darstellung eines ersten Ausführungsbeispiels eines Ventileinsatzes für die Ventilpatrone gemäß Figur 1,
- Figur 3: eine schematische Querschnittdarstellung entlang der Linie A-A aus Figur 1 zur Darstellung eines zweiten Ausführungsbeispiels eines Ventileinsatzes für die Ventilpatrone gemäß Figur 1,
- Figur 4: eine schematische perspektivische Darstellung eines dritten Ausführungsbeispiels eines Ventileinsatzes für die Ventilpatrone gemäß Figur 1, und
- Figur 5: eine schematische Schnittdarstellung eines herkömmlichen Magnetventils.

### Beschreibung

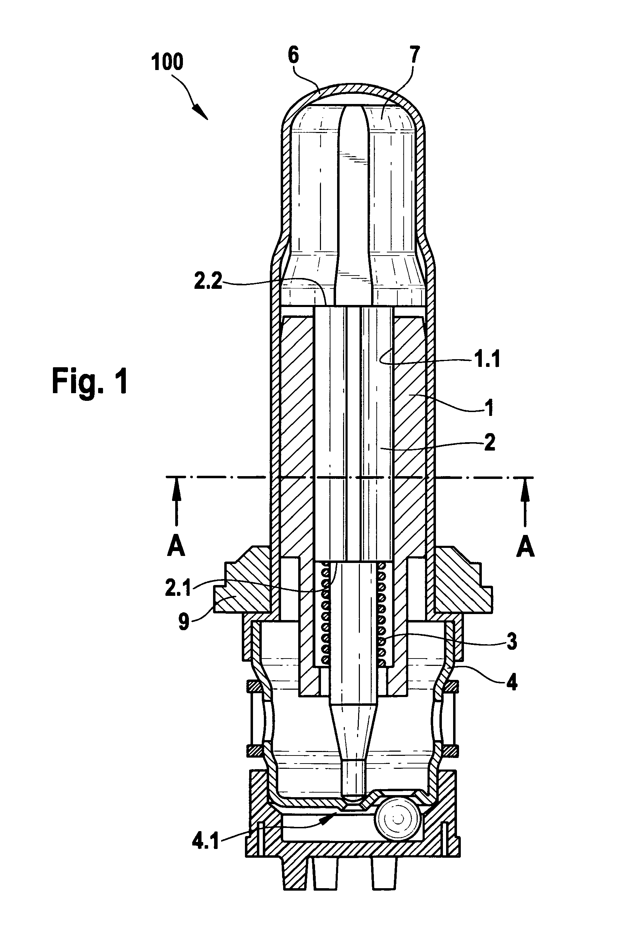

Wie aus Figur 1 ersichtlich ist, umfasst eine Ventilpatrone 100 für ein erfindungsgemäßes Magnetventil, welche über eine Ventilbuchse 9 an einem nicht dargestellten Verstemmbereich mit einem Fluidblock verstemmt ist, eine Kapsel 6, eine Hülse 4, einen Ventileinsatz 1, einen in einer Innenbohrung 1.1 des Ventileinsatzes 1 geführten Stößel 2, eine Rückstellfeder 3, welche sich in der Innenbohrung 1.1 gegen den Ventileinsatz 1 abstützt und den Stößel 2 zurückstellt, und einen Anker 7. In den Stößel 2 sind beispielsweise zwischen einer Stößeloberseite 2.2 und einer Stößelunterseite 2.1 Volumenausgleichsnuten eingebracht. Die Kapsel 6 ist überlappend auf den Ventileinsatz 1 geschoben und als zur Atmosphäre hin dichtendes Ventilbauteil ausgeführt. Im Unterschied zu dem in Figur 5 dargestellten herkömmlichen Magnetventil 110 ist die Kapsel 6 in Richtung des Verstemmbereichs verlängert. Dadurch kann die herkömmliche Dichtschweißung 8 aus Fig. 5 entfallen. Zudem werden die Fluidkräfte und die Verstemmkräfte nicht mehr vom Ventileinsatz 1, sondern von der Ventilbuchse 9 aufgenommen und über den nicht dargestellten Verstemmbereich an den Fluidblock übertragen. In der Kapsel 6 wirkt der gegenüber dem herkömmlichen Magnetventil 110 aus Figur 5 unveränderte Anker 7 und setzt den in der Funktion unveränderten Stößel 2 gegen die Rückstellfeder 3 in Bewegung. Der untere Teil der Ventilpatrone und ein Dichtsitz 4.1 werden von der Hülse 4 gebildet, welche in die Kapsel 6 gefügt ist. Die Abdichtung der beiden Ventilseiten kann durch einen Kunststoffeinsatz oder durch Dichteinpressen in einen Sitz im nicht dargestellten Fluidblock erfolgen. Zudem umfasst das erfindungsgemäße Magnetventil eine nicht dargestellte Magnetbaugruppe, welche beispielsweise der herkömmlichen Magnetbaugruppe 5 gemäß Figur 5 entspricht. Ein von der nicht dargestellten Magnetbaugruppe über eine Wandung der Kapsel 6 in den Ventileinsatz 1 eingeleiteter Magnetfluss wird vom Ventileinsatz 1 axial über einen Luftspalt in Richtung Anker 7 geleitet.

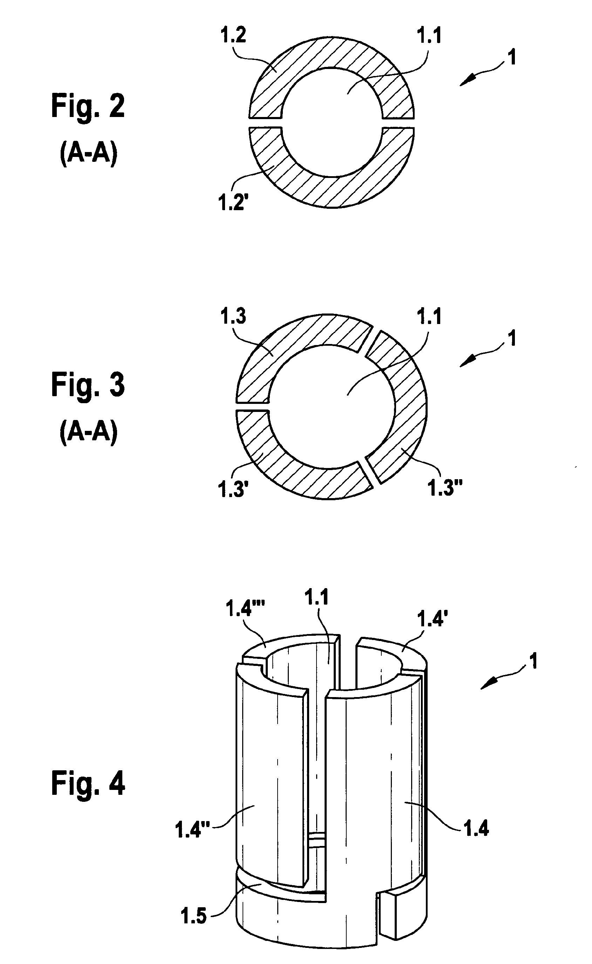

Nachfolgend werden unter Bezugnahme auf die Figuren 2 bis 4 verschiedene Ausführungsformen des Ventileinsatzes 1 für die Ventilpatrone 100 des erfindungsgemäßen Magnetventils gemäß Figur 1 beschrieben. Wie aus Figur 2 bis 4 ersichtlich ist, ist der Ventileinsatz 1 aus mehreren Segmenten 1.2, 1.2', 1.3, 1.3', 1.3", 1.4, 1.4', 1.4", 1.4"' aufgebaut, welche im zusammengesetzten Zustand die Innenbohrung 1.1 zur Führung des Stößels 2 bilden und einen nicht dargestellte Magnetfluss der Magnetbaugruppe leiten. Die Segmente 1.2, 1.2', 1.3, 1.3', 1.3", 1.4, 1.4', 1.4", 1.4"' sind als einfache Körper ohne Innenkonturen ausgeführt, d.h. die Innenbohrung 1.1 zur Führung des Stößels 2 entsteht durch das Zusammensetzen der einzelnen Segmente 1.2, 1.2', 1.3, 1.3', 1.3", 1.4, 1.4', 1.4", 1.4'" und nicht durch eine Bohrung, so dass in vorteilhafter Weise die Herstellung des Ventileinsatzes weiter vereinfacht und kostengünstiger gestaltet werden kann, da der teure Prozessschritt zum chemischen Entgraten der Innenbohrung 1.1 des Ventileinsatzes 1 entfallen kann. Die Segmente 1.2, 1.2', 1.3, 1.3', 1.3", 1.4, 1.4', 1.4", 1.4'" sind vorzugsweise achsensymmetrisch zur Längsachse ausgeführt.

So zeigt Figur 2 ein erstes Ausführungsbeispiel des Ventileinsatzes 1 für die Ventilpatrone 100 des erfindungsgemäßen Magnetventils gemäß Figur 1, welches aus zwei identischen Ventileinsatzhälften 1.2, 1.2' aufgebaut ist.

Figur 3 zeigt ein zweites Ausführungsbeispiels des Ventileinsatzes 1 für die Ventilpatrone 100 des erfindungsgemäßen Magnetventils gemäß Figur 1, welches aus drei symmetrischen Rohrabschnitten 1.3, 1.3', 1.3" aufgebaut ist.

Figur 4 zeigt ein drittes Ausführungsbeispiel des Ventileinsatzes 1 für die Ventilpatrone 100 des erfindungsgemäßen Magnetventils gemäß Figur 1, welches vier achsensymmetrisch zur Längsachse ausgeführte Segmente 1.4,1.4', 1.4", 1.4'" mit einer axialen Teilung umfasst, wobei die axiale Teilung einen Sprung 1.5 aufweist.

## Patentansprüche

1. Magnetventil mit einer Magnetbaugruppe (5), einer Kapsel (6), einem in die Kapsel (6) eingeschobenen Ventileinsatz (1) und einem in einer Innenbohrung (1.1) des Ventileinsatzes (1) beweglich geführten Stößel (2), **dadurch gekennzeichnet, dass** der Ventileinsatz (1) aus mindestens zwei Segmenten (1.2, 1.2', 1.3, 1.3', 1.3", 1.4, 1.4', 1.4", 1.4"') aufgebaut ist, welche im zusammengesetzten Zustand die Innenbohrung (1.1) zur Führung des Stößels (2) bilden und einen Magnetfluss (5.1) der Magnetbaugruppe (5) leiten.

2. Magnetventil nach Anspruch 1, **dadurch gekennzeichnet, dass** die Kapsel (6) mit einer Ventilbuchse (9) an einem Verstemmbereich mit einem Fluidblock verstemmt ist und eine Hülse (4) mit einem Dichtsitz (4.1) in die Kapsel (6) eingefügt ist.

3. Magnetventil nach Anspruch 1 oder 2, **dadurch gekennzeichnet, dass** in den Stößel (2) zwischen einer Stößeloberseite (2.2) und einer Stößelunterseite (2.1) Volumenausgleichsnuten eingebracht sind.

4. Magnetventil nach einem der Ansprüche 1 bis 3, **gekennzeichnet durch** eine Rückstellfeder (3), welche sich innerhalb des Ventileinsatzes (1) gegen den Ventileinsatz (1) abstützt und den Stößel (2) zurückstellt.

5. Magnetventil nach einem der Ansprüche 1 bis 4, **dadurch gekennzeichnet, dass** die mindestens zwei Segmente (1.2, 1.2', 1.3, 1.3', 1.3", 1.4, 1.4', 1.4", 1.4"') als einfache Körper ohne Innenkonturen ausgeführt sind.

6. Magnetventil nach einem der Ansprüche 1 bis 5, **dadurch gekennzeichnet, dass** die mindestens zwei Segmente (1.2, 1.2', 1.3, 1.3', 1.3", 1.4, 1.4', 1.4", 1.4"') zur Längsachse achsensymmetrisch ausgeführt sind.

7. Magnetventil nach Anspruch 6, **dadurch gekennzeichnet, dass** die mindestens zwei Segmente (1.2, 1.2', 1.3, 1.3', 1.3") als symmetrische Rohrabschnitte ausgeführt sind.

8. Magnetventil nach einem der Ansprüche 1 bis 7, **dadurch gekennzeichnet, dass** die mindestens zwei Segmente (1.4, 1.4', 1.4", 1.4"') eine axiale Teilung mit einem Sprung (1.5) aufweisen.

## Claims

1. Solenoid valve with a magnetic subassembly (5), with a capsule (6), with a valve insert (1) pushed into the capsule (6), and with a tappet (2) guided movably in an inner bore (1.1) of the valve insert (1), **characterized in that** the valve insert (1) is constructed from at least two segments (1.2, 1.2', 1.3, 1.3', 1.3", 1.4, 1.4', 1.4", 1.4"') which, in the assembled state, form the inner bore (1.1) for guiding the tappet (2) and conduct a magnetic flux (5.1) of the magnetic subassembly (5).

2. Solenoid valve according to Claim 1, **characterized in that** the capsule (6) is caulked together with a fluid block by means of a valve bush (9) at a caulking region, and a sleeve (4) is inserted with a sealing seat (4.1) into the capsule (6).

3. Solenoid valve according to Claim 1 or 2, **characterized in that** volume equalization grooves are introduced into the tappet (2) between a tappet topside (2.2) and a tappet underside (2.1).

4. Solenoid valve according to one of Claims 1 to 3, **characterized by** a return spring (3) which is supported within the valve insert (1) against the valve insert (1) and which returns the tappet (2).

5. Solenoid valve according to one of Claims 1 to 4, **characterized in that** the at least two segments (1.2, 1.2', 1.3, 1.3', 1.3", 1.4, 1.4', 1.4", 1.4"') are designed as simple bodies without inner contours.

6. Solenoid valve according to one of Claims 1 to 5, **characterized in that** the at least two segments (1.2, 1.2',1.3,1.3',1.3",1.4,1.4',1.4",1.4"') are designed to be axially symmetrical with respect to the longitudinal axis.

7. Solenoid valve according to Claim 6, **characterized in that** the at least two segments (1.2, 1.2', 1.3, 1.3', 1.3") are designed as symmetrical tube portions.

8. Solenoid valve according to one of Claims 1 to 7, **characterized in that** the at least two segments (1.4, 1.4', 1.4", 1.4"') have an axial parting with a jump (1.5).

## Revendications

1. Electrovanne comprenant un module magnétique (5), une capsule (6), un insert de soupape (1) enfoncé dans la capsule (6) et un poussoir (2) guidé mobile dans un alésage interne (1.1) de l'insert de soupape (1), **caractérisée en ce que** l'insert de soupape (1) est constitué d'au moins deux segments (1.2, 1.2', 1.3, 1.3', 1.3", 1.4, 1.4', 1.4", 1.4"'), qui forment dans l'état assemblé l'alésage interne (1.1) pour le guidage du poussoir (2) et qui guident un flux magnétique (5.1) dans le module magnétique (5).

2. Electrovanne selon la revendication 1, **caractérisée en ce que** la capsule (6) est matée avec une douille de soupape (9) au niveau d'une région de matage avec un bloc fluide et une douille (4) avec un siège d'étanchéité (4.1) est insérée dans la capsule (6).

3. Electrovanne selon la revendication 1 ou 2, **caractérisée en ce que** des rainures de compensation de volume sont pratiquées dans le poussoir (2) entre un côté supérieur de poussoir (2.2) et un côté inférieur de poussoir (2.1).

4. Electrovanne selon l'une quelconque des revendications 1 à 3, **caractérisée par** un ressort de rappel (3) qui s'appuie à l'intérieur de l'insert de soupape (1) contre l'insert de soupape (1) et qui rappelle le poussoir (2).

5. Electrovanne selon l'une quelconque des revendications 1 à 4, **caractérisée en ce que** les au moins deux segments (1.2, 1.2', 1.3, 1.3', 1.3", 1.4, 1.4', 1.4", 1.4"') sont réalisés sous forme de corps simples sans contours intérieurs.

6. Electrovanne selon l'une quelconque des revendications 1 à 5, **caractérisée en ce que** les au moins deux segments (1.2, 1.2', 1.3, 1.3', 1.3", 1.4, 1.4', 1.4", 1.4"') sont réalisés avec une symétrie axiale par rapport à l'axe longitudinal.

7. Electrovanne selon la revendication 6, **caractérisée en ce que** les au moins deux segments (1.2, 1.2', 1.3, 1.3', 1.3) sont réalisés sous forme de portions tubulaires symétriques.

8. Electrovanne selon l'une quelconque des revendications 1 à 7, **caractérisée en ce que** les au moins deux segments (1.4, 1.4', 1.4", 1.4"') présentent une division axiale avec un saut (1.5).
